(19)

Europäisches
Patentamt
European
Patent Office
Office européen
des brevets

(11) **EP 1 885 076 B1**

(12) **EUROPEAN PATENT SPECIFICATION**

(45) Date of publication and mention
of the grant of the patent:
**25.08.2010 Bulletin 2010/34**

(51) Int Cl.:
***H04L 1/00*** *(2006.01)*

(21) Application number: **07290958.3**

(22) Date of filing: **31.07.2007**

(54) **Energy accumulation in destination nodes of wireless relay networks**

Energie Anhäufung in Empfangsknoten drahtloser Relay Netze

Accumulation d'énergie dans des noeuds de réception des réseaux de relais sans fil

(84) Designated Contracting States:
**FR**

(30) Priority: **01.08.2006 US 497987**

(43) Date of publication of application:
**06.02.2008 Bulletin 2008/06**

(73) Proprietor: **Mitsubishi Electric Corporation**
**Chiyoda-ku**
**Tokyo**
**100-8310 (JP)**

(72) Inventors:
• **Mehta, Neelesh B**
**Medford, MA 02155 (US)**
• **Yim, Raymond**
**Massachusetts 02492 (US)**
• **Molisch, Andreas F.**
**Massachusetts 02474 (US)**
• **Zhang, Jinyun**
**Massachusetts 02141 (US)**

(74) Representative: **Habasque, Etienne J. Jean-**
**François et al**
**Cabinet Lavoix**
**2, place d'Estienne d'Orves**
**75441 Paris Cedex 09 (FR)**

(56) References cited:
**US-A1- 2003 026 222**

• **HEDAYAT A ET AL: "Cooperative communication in wireless networks" October 2004 (2004-10), IEEE COMMUNICATIONS MAGAZINE, IEEE SERVICE CENTER, PISCATAWAY, US, PAGE(S) 74-80 , XP011120045 ISSN: 0163-6804 * page 76, right-hand column, line 60 - page 77, left-hand column, line 22 ***
• **JIANGZHUO CHEN ET AL: "Minimum energy accumulative routing in wireless networks" INFOCOM 2005. 24TH ANNUAL JOINT CONFERENCE OF THE IEEE COMPUTER AND COMMUNICATIONS SOCIETIES. PROCEEDINGS IEEE MIAMI, FL, USA 13-17 MARCH 2005, PISCATAWAY, NJ, USA,IEEE, 13 March 2005 (2005-03-13), pages 1875-1886, XP010829326 ISBN: 0-7803-8968-9**
• **AGARWAL M ET AL: "Energy efficient broadcast in wireless ad hoc networks with hitch-hiking" 7 March 2004 (2004-03-07), INFOCOM 2004. TWENTY-THIRD ANNUALJOINT CONFERENCE OF THE IEEE COMPUTER AND COMMUNICATIONS SOCIETIES HONG KONG, PR CHINA 7-11 MARCH 2004, PISCATAWAY, NJ, USA,IEEE, PAGE(S) 2096-2107 , XP010740565 ISBN: 0-7803-8355-9 * the whole document ***

## EP 1 885 076 B1

**Description**

BACKGROUND OF THE INVENTION

1. Field of the Invention

This invention relates generally to wireless relay networks with multi-hop transmission of packets, and more particularly to energy accumulation in such wireless relay networks.

2. Description of the Related Art

**Wireless Relay Networks**

In a wireless relay network, a source node transmits a packet to a destination node via relay nodes using multiple hops, i.e., a route. In many such networks, the nodes are small, low complexity sensor nodes. Computational, memory, and power resources in such nodes are severely limited. Therefore, it is important that such resources are conserved as much as possible.

**Multi-Hop Routing**

Multi-hop routing is often used in conventional wireless relay networks to reduce a total energy required to deliver a unicast packet, J. Li, D. Cordes, and J. Zhang, "Power-aware routing protocols in ad hoc wireless networks," IEEE Wireless Commun. Magazine, pp. 69-81, Dec. 2005, and A. Michail and A. Ephremides, "Energy efficient routing for connection-oriented traffic in ad hoc wireless networks," Proc. IEEE Int. Symp. Personal, Indoor, Mobile Radio Commun., pp. 762-66, Sept. 2000.
In those networks, the source transmits the packet to the destination through one or more intermediate relays along a pre-determined energy efficient route. When a packet cannot be decoded successfully by a relay or the destination, the packet is discarded and needs to be retransmitted, J. E. Wieselthier, G. D. Nguyen, and A. Ephremides, "On the construction of energy efficient broadcast and multicast trees in wireless networks," Proc. IEEE INFOCOM, Mar. 2000, A. E. Khandani, J. Abounadi, E. Modiano, and L. Zheng, "Cooperative routing in wireless networks," Proc. Allerton Conf. on Commun., Contr. and Computing, May 2003, A. S. Ahluwalia and E. H.Modiano, "On the complexity and distributed construction of energy efficient broadcast trees in wireless ad hoc networks," IEEE Trans. Wireless Commun., vol. 4, no. 5, 2005, and J. Cartigny, D. Simplot, and I. Stojmenovi'c, "Localized minimum-energy broadcasting in ad-hoc networks," Proc. IEEE INFOCOM, Apr. 2003. Those approaches are not energy efficient, as corrupted packets are completely discarded, and of no further use.

**Energy Accumulation**

Energy accumulative routing improves the energy efficiency of wireless relay networks, I. Maric and R. D. Yates, "Efficient multihop broadcast for wideband systems," DIMACS Workshop on Signal Processing for Wireless Transmission, Oct. 2002, M. Agarwal, J. H. Cho, L. Gao, and J.Wu, "Energy efficient broadcast in wireless ad hoc networks with hitch-hiking," Proc. IEEE INFOCOM, March 2004, both incorporated herein by reference. In energy accumulative routing, a relay stores a received signal of a packet that is too weak to be decoded, and combines the stored signal with other signals of the same packet that are received later. After successfully decoding the packet, the relay broadcasts the packet towards the destination. However, those methods are designed for broadcast packets and not unicast packets.
While current and next generation wireless networks do have mechanisms in place to implement energy accumulation, doing so at each and every node consumes resources. The known energy accumulation techniques work on an idealized premise that every node stores the signal of each and every received copy of a packet that is transmitted from multiple nodes in the network until the node can successfully decode the packet. Typically, the source transmits multiple packets, one after the other. In this case, the relays have to store multiple "soft" copies of not one, but many packets that are transmitted by all the nodes that may have already decoded the packets.
To make matters worse, relays can act as relays for different sources, so that their storage effort is proportional to the total number of distinct packets "in transit" in the network. Because relays do not directly benefit from transmitting a packet from the source to the destination, it is difficult to justify expending significant resources for energy accumulation. In addition, finding an optimal energy accumulative route in a wireless network with many relays nodes and jointly determining the transmit power levels of the nodes along the route is extremely difficult. '
It is known that minimum energy accumulative routing (MEAR) for unicast transmission is an NP-Complete

2

problem, J. Chen, L. Jia, X. Liu, G. Noubir, and R. Sundaram, "Minimum energy accumulative routing in wireless networks," Proc. IEEE INFOCOM, 2005. Thus, no scalable optimum mechanism is possible. The MEAR of Chen et al. is intended for full energy accumulation, and is completely centralized, i.e., every node needs to be aware of the states of all the links between all of the nodes in the network.

Another technique performs energy accumulative routing for multicast packets, I. Maric and R. D. Yates, "Cooperative multicast for maximum network lifetime," IEEE J. Select. Areas Commun., vol. 23, pp. 127-135, Jan. 2005.

A known solution is also described in the Patent document US 2003/00262 222 A1.

SUMMARY OF THE INVENTION

The embodiments of the invention provide a wireless network, in which relay nodes cooperate to minimize a total energy consumed in transmitting a unicast packet from a source node to a destination node. The embodiments use a progressive accumulative routing (PAR) process, which progressively performs relay discovery, relay ordering and power allocation in a distributed manner, such that each relay node only needs local information.

The embodiments of the invention also use a destination energy accumulation (DEA) process, in which only the destination node stores multiple received copies of a packet, because the signals of an individual packet may be too weak to reliably decode the packet when the low complexity relay nodes use a decode-and-forward scheme.

The PAR and DEA processes considerably reduce the total energy consumption in the network, and can be implemented efficiently. Furthermore, the processes provide optimal routing with a high probability.

BRIEF DESCRIPTION OF THE DRAWINGS

Figure 1 is a block diagram of a wireless relay network according to an embodiment of the invention;

Figures 2A-2D are block diagrams of a network with additional relay nodes;

Figure 3 is a block diagram of a data packet and a request to cooperate packet (RTC) according to an embodiment of the invention;

Figure 4 is a block diagram of descriptions of fields in the RTC packet of Figure 3 according to an embodiment of the invention;

Figure 5 is a block diagram of pseudo-code executed by a relay node of the network of Figure 1 according to an embodiment of the invention; and

Figure 6 is block diagram of pseudo-code executed by other nodes receiving a packet according to an embodiment of the invention.

DETAILED DESCRIPTION OF THE PREFERRED EMBODIMENTS

**Wireless Relay Network**

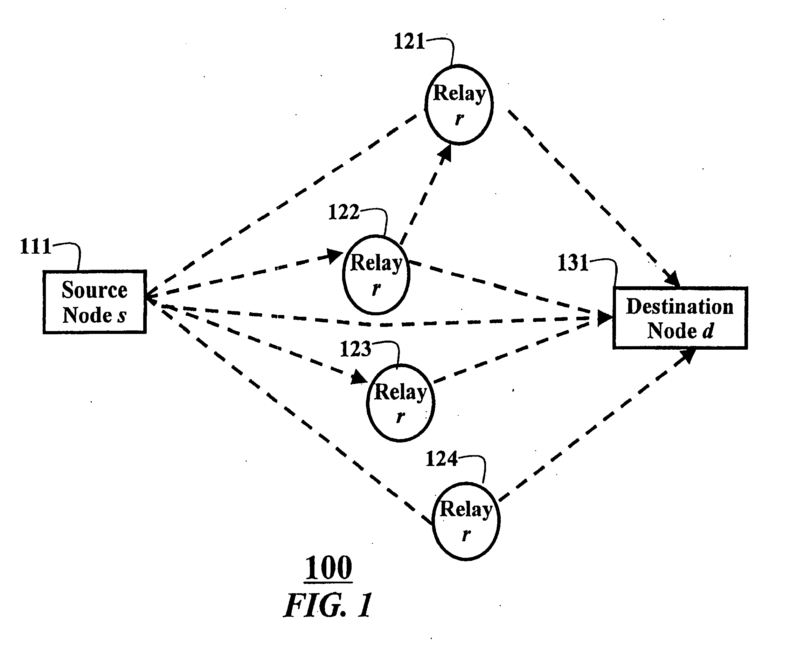

Figure 1 shows a wireless relay network 100 according to an embodiment of our invention. The network includes a source node $s$ 111, a destination node $t$ 131, and one or more intermediate decode-and-forward relay nodes $r$ 121-124. All nodes use unicast transmission via single omnidirectional antennas for transmission and reception, and operate in half-duplex mode, i.e., the nodes can either transmit or receive, but not do both simultaneously. The network 100 is quasi-static, in which occasional link updates reflect possible changes of channel state information of channels of the network. The source can transmit directly to the destination, or indirectly via one or more relay nodes. The relay nodes can forward packets to the destination serially or in parallel.

**Destination Energy Accumulation**

The embodiments of the invention use destination energy accumulation (DEA). DEA fills the gap between the two known extremes, namely (i) a conventional network, which requires simple decode-and-forward relays that do not benefit from energy accumulation, and (ii) a complete energy-accumulation network, which requires highly complex decode-and-forward relays that accumulate energy to the greatest possible extent.

In our embodiments, only the destination node uses multiple stored versions of the packet to decode the packet, while an intermediate relays does not store multiple versions of a packet. That is, the relay nodes discard the packet after the packet has been forwarded. In one of the embodiment, versions of the packet are copies of the packet.

A cyclic redundancy check can be inserted in the packet to determine whether the packet is decoded correctly. Energy accumulation only at the destination is justifiable for the following reasons. By energy accumulation, we specifically mean storing multiple versions of the same packet only at the destination node. In many sensor networks, the destination node, which typically gathers sensor data from all sensor nodes, usually has greater computational, memory and power resources. In addition, the effort of accumulation occurs at the node that benefits from the accumulation. The number of packets that need to be accumulated and stored is limited. Furthermore, energy accumulation only at the destination reduces energy consumption throughout the network. As another advantage, energy accumulation only at the destination significantly simplifies route discovery, and makes a practical implementation feasible.

**Progressive Accumulative Routing**

We also use a progressive accumulative routing (PAR) process, which determines an energy efficient DEA route, and sets the node transmit powers in a distributed and progressive manner. As a distributed process, PAR establishes energy efficient accumulative routes based only on local channel state information available at each node. The progressive nature of the process enables incremental addition of new nodes to an established DEA route, and realizes additional energy reductions.

Due to changes in the propagation environment or due to the mobility of the nodes, the channels between the various nodes changes with time. PAR can be used to update an already established route.

The PAR process significantly improves the total energy efficiency compared to conventional non-accumulative networks. That is, the amount of energy that is consumed while transmitting packets along the route is decreased. With a high probability, the PAR process performs as well as optimal complete energy accumulation at all nodes.

**Network Model**

Let $V$ be the set of nodes in the network 100. For nodes $u$, $v \in V$, let $h_{uv}$ be the absolute value of the *channel gain* between node $u$ and node $v$. A node can only determine its channel gain with respect to neighboring nodes. The node need not determine the phase of any channel gain, nor can the node determine any other gain of links between other nodes.

A node can forward a packet only after having reliably decoded that packet. According to an embodiment of the invention, only the destination node accumulates energy by storing multiple versions of the packet, while the relay nodes do not. The destination node can receive and store multiple "soft" copies of the same packet from multiple nodes.

The packet can be successfully decoded by the destination node after the total energy accumulated from the multiple received versions of the packet exceeds a predetermined threshold, which depends on a modulation and a coding used for transmission, see Maric et al., and. Agarwal et al., above. A cyclic redundancy check (CRC) may be included in the packet to enable the receiver to determine if it has correctly decoded the packet or not.

If the destination receives one version of the packet from each of nodes $u_1$, $u_2$, ..., $u_n$, then the destination can decode the packet successfully when the total accumulated power $\sum_{k=1}^{n} p_k h_{u_k t}$ is equal or greater than the threshold $\bar{\gamma}$, where $p_k$ is the transmit power of node $u_k$. A relay node $v$ can successfully decode the packet transmitted by node $u$ with power $p$ if and only if $p h_{uv} \geq \bar{\gamma}$, otherwise, the relay discards the undecodable packet. Without loss of generality, a duration of a packet is normalized to unity. Therefore, we interchangeably use the terms energy and power.

**Progressive Accumulative Routing**

We consider a single source, $s$, and a single destination, $t$. First, we derive the general conditions for power reduction when (i) a single relay is added between the *nodes s* and *t*, and (ii) when a second relay is introduced in an energy accumulative route that already includes one relay. As described below, very limited information is often needed to determine the optimal relay. Then, we extend the result to a general energy accumulative route that includes an arbitrary number of relays. We also describe how additional energy reduction can be achieved using the local channel state information at the relays and limited additional information.

**Adding a First Relay between the Source and the Destination**

**Lemma 1**

An accumulative route from the source node s to the destination node $t$ through relay node $r$ can reduce a total power consumption if and only if there exists a node $r$, such that

$$h_{st} < \min\{h_{sr}, h_{rt}\}. \tag{1}$$

The maximum total power reduction, $P_s^{red}(r)$, by having node $r$ act as a relay is given by

$$P_s^{red}(r) = (1 - h_{st}/h_{sr})(1 - h_{st}/h_{rt})(\bar{\gamma}/h_{st}), \tag{2}$$

and is achieved when nodes $s$ and $r$ set their transmission powers $P_s$ and $P_r$, respectively, at

$$P_s = (1/h_{sr})\,\bar{\gamma}, \text{ and } P_r = (1/h_{rt})(1 - h_{st}/h_{sr})\,\bar{\gamma}. \tag{3}$$

**Proof**

First, we assume that none of the nodes satisfy equation (1). This implies that $h_{st} \geq h_{sr}$, and/or $h_{st} \geq h_{rt}$, for all relays $r \in V - \{s, t\}$. For any node, $r$, if $h_{st} \geq h_{sr}$, then less power is required to transmit a packet successfully to the destination than to the relay. If $h_{st} \geq h_{rt}$, given the same transmission power, the destination receives a higher signal power if a packet is transmitted by the source and not the relay. Hence, the use of a relay cannot reduce the total power consumption.

Let there exist at least one node, $r$, such that $h_{st} < \min \{h_{sr}, h_{rt}\}$. In DEA, if $r$ is a relay, then the source first transmits a packet with power $P_s$ so that node $r$ can decode the packet successfully. Then, node $r$ transmits the packet to the destination node $t$ with power $P_r$. The destination decodes the packet using the energy accumulated from the transmissions of both nodes $s$ and $r$. Hence, the optimal power allocation problem is the following:

$$\min_{P_s, P_r} P_s + P_r \quad \text{subject to} \quad \begin{bmatrix} h_{sr} & 0 \\ h_{st} & h_{rt} \end{bmatrix} \begin{bmatrix} P_s \\ P_r \end{bmatrix} \geq \begin{bmatrix} \bar{\gamma} \\ \bar{\gamma} \end{bmatrix}. \tag{4}$$

The first inequality in the constraint in equation (4) ensures that node $r$ decodes the packet transmitted by node $s$. After node $r$ decodes the packet, it is more energy efficient to let node r deliver the remaining energy for node $t$ to decode the packet, because $h_{rt} > h_{st}$. This leads to the power allocation in equation (3), which satisfies the constraint in equation (4) with equality. The total power reduction with the power setting in equation (3), compared to the minimum power, $\bar{\gamma}/h_{st}$, required for a direct transmission from node $s$ to node $t$, is then given by equation (2). This power reduction is positive when equation (1) is satisfied.

Lemma 1 shows that only nodes that satisfy equation (1) are eligible candidates for reducing total energy consumption. Note that for the source to determine which node is the best relay, the source only needs to know the gain $h_{rt}$ in addition to any local information the node already has. And, if node $s$ is sending a packet directly to node $t$, all the eligible candidates can already decode the packet because $h_{sr} > h_{st}$.

**Adding the Second Relay between the Source and the Destination**

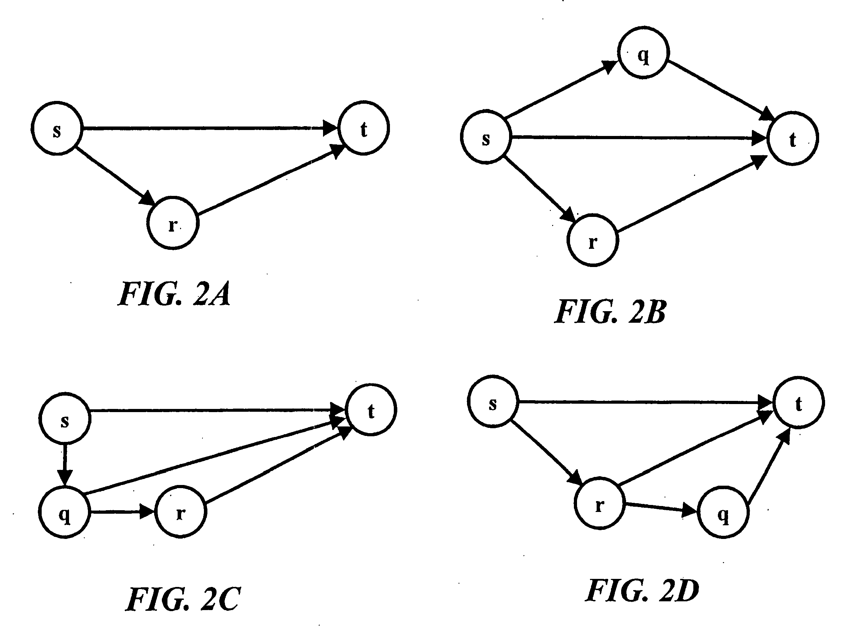

Let node $r$ denote the optimal first relay already present in the DEA route as shown in Figure 2A. As shown in Figures 2B-2D, the second relay $q$ can be added to one of the three links: $s$-$t$, $s$-$r$, and $r$-$t$. Lemma 2 states that the first possibility is always sub-optimal and need not be considered.

**Lemma 2**

If the relay $r$ is the optimal single relay for cooperating in the transmission from nodes $s$ to $t$, adding an additional node, $q$, in parallel between nodes $s$ and $t$, as in Figure 2B cannot reduce the total transmission power in DEA.

**Proof**

In order for both relays $q$ and $r$ to successfully decode the packet from node $s$, node $s$ must transmit with a minimum power $P_s = \bar{\gamma} / \max\{h_{sq}, h_{sr}\}$. After nodes $q$ and $r$ successfully decode the packet, it is optimal to add power only to the node with the best channel to node $t$. Thus, two relays in parallel is only useful if $h_{qt} = h_{rt}$.

Now, assume that $h_{qt} = h_{rt}$. If $h_{sq} > h_{sr}$, then this implies that $P_s^{\text{red}}(q) > P_s^{\text{red}}(r)$, which contradicts the assumption that relay $r$ is the optimal single relay. If $h_{sq} < h_{sr}$, then only node $r$ should be used as the relay. If $h_{sq} = h_{sr}$, then the total power consumption is the same as the single relay case.

Based on Lemma 2, we only need to consider adding a new relay between the $s$-$r$ and $r$-$t$ links in the established DEA route, as shown in Figures 2C-2D.

**Lemma 3**

Let node $r$ be the optimal single relay in an established DEA route. If and only if there exists a node $q \in V - \{s, r, t\}$, such that $h_{sq} > h_{sr}$, $h_{qt} < \min\{h_{qr}, h_{rt}\}$, and

$$h_{qr}((1/h_{sr}) - (1/h_{sq})) > (h_{rt} - h_{qt}) / (h_{rt} - h_{st}), \qquad (5)$$

then adding node $q$ between nodes $s$ and $r$, as in Figure 2C, reduces total energy consumption. The optimal power consumption, $P_s^{\text{red}}(q)$, is

$$P_s^{\text{red}}(q) = \bar{\gamma} / h_{rt} [(h_{rt} - h_{st})((1/h_{sr}) - (1/h_{sq})) + ((h_{qt} - h_{rt})/hqr), \qquad (6)$$

when the source and the relays set their respective transmission powers $P_s$, $P_q$, and $P_r$ at

$$P_s = 1/ h_{sq} \; \bar{\gamma}, \; P_q = 1/h_{qr} \bar{\gamma}, \text{ and } P_r = (1/h_{rt})(1 - h_{st}/h_{sq} - h_{qt}/h_{qr}) \; \bar{\gamma} .(7)$$

**Proof**

In an energy efficient DEA route, each relay transmits the packet with the minimum power required to reach the next relay, while the last relay transmits the packet to the destination with a power that is just sufficient for the destination to decode the packet using the energy accumulated from the transmissions by previous relays. This can be shown to lead to the power allocation in equation (7) for the DEA route $s$-$q$-$r$-$t$. The power reduction in equation (6) is the difference between the total transmit powers for routes $s$-$q$-$r$-$t$ and $s$-$r$-$t$.

The DEA route $s$-$q$-$r$-$t$ cannot reduce power if $h_{sq} > h_{sr}$, otherwise, node $q$ can be dropped from the route, as node $r$ itself can successfully decode the packet transmitted by node $s$. Similarly, node $r$ can be dropped from the route if $h_{qt} > \min\{h_{qr}, h_{rt}\}$. But this contradicts the assumption that node $r$ is the optimal single relay. The total power reduction in equation (6) is positive if and only if the condition in equation (5) is satisfied.

**Lemma 4**

Let node $r$ be the optimal single relay in an established DEA route. If and only if there exists a node $q \in V - \{s, r, t\}$, such that

$$h_{qt} > h_{rt}, \text{ and } h_{rt} / h_{rq} < 1 - h_{st} / h_{sr}, \tag{8}$$

then adding node $q$ between nodes $r$ and $t$, as shown in Figure 2D, leads to an optimal power reduction, $P_r^{\text{red}}(q),$ of

$$P_r^{\text{red}}(q) = (1/h_{rt} - 1/h_{qt})(1 - h_{st}/h_{sr} - h_{rt}/h_{rq}) \, \bar{\gamma} \,, \tag{9}$$

when the source and the relays set their transmission powers $P_s$, $P_q$, and $P_r$ respectively, at

$$P_s = 1/h_{sr}\bar{\gamma} \,, P_r = 1/h_{rq}\bar{\gamma} \,, \text{ and } P_q = 1/h_{qt} (1 - h_{st}/h_{sr} - h_{rt}/h_{rq}) \, \bar{\gamma} \,. \tag{10}$$

**Proof**

The power allocation in equation (10) follows from an argument similar to that in Lemma 3. Also, node $q$ can be dropped from the DEA route $s$-$r$-$q$-$t$ if $h_{qt} \leq h_{rt}$. The total power reduction in equation (9) is the difference between the total powers consumed by routes $s$-$r$-$q$-$t$ and $s$-$r$-$t$. It is positive if and only if equation (8) is satisfied.

Notice that before the second relay is added, the first relay $r$ transmits the packet with power $1/h_{rt}(1 - h_{st}/h_{sr})$ $\bar{\gamma}$. From the necessary and sufficient condition in equation (8), it can be seen that all eligible nodes that can reduce total power can successfully decode the packet transmitted by node $r$. This fact is exploited when we progressively add relays to reduce the total power consumption.

**Multiple relays**

As described above, two relays in parallel cannot reduce the total power consumption over an optimal single relay DEA route. This result can be generalized to the case where multiple relays are present. Therefore, we only need to consider the cases where new nodes are inserted in between two adjacent relays or between a relay and the destination, as was done in Figures 2C-2D. We refer to such a route a serial DEA route.

To consider adding a node, $w$, in the serial DEA route that already contains multiple relays, we first define the following terminology. If nodes $u$ and $v$ are two relays in the serial DEA route, and node $u$ successfully decodes the packet before the relay $v$, then we say that node $u$ is *before* node $v$, and node $v$ is *after* node $u$. We say that node $v$ is *immediately after* or *next to* node $u$ if node $v$ is after node $u$, and there is no relay that is after node $u$ and before node $v$. The relay immediately after node $u$ in the serial DEA route is denoted by $N(u)$. A relay $u$ is called the *last relay* in the serial DEA route if $N(u) = t$.

The *relay set, R,* is the set of all relays, excluding the destination, that are in the serial DEA route. The *backward relay set*, $B(u)$, is the ordered set of relays *before* node $u$ in the route. $A(u) = P_{r \in B(u)} h_{rt}/h_r N_{(r)}$ denotes the fraction of the total energy, which is required to successfully decode a packet at the destination. The energy accumulates at the destination due to transmissions from the relays in the set $B(u)$.

**Theorem 1**

Let $u$ be a relay in the serial DEA route, with $v = N(u)$ being the relay immediately after the relay $u$. If $u$ is not the last relay, $l$, in the route, then adding the node $w$ as a relay immediately after node $u$ reduces the total power consumption if $w$ satisfies the following two sufficient conditions:

$$h_{uw} > h_{uv} \text{ and } h_{wv} (1/h_{uv} - 1/h_{uw}) > (h_{lt} - h_{wt})/(h_{lt} - h_{ut}). \qquad (11)$$

A total power reduction of

$$P_u^{\text{red}}(w) = 1/h_{lt} \left[(h_{lt} - h_{ut})(1/h_{uv} - 1/h_{uw}) + (h_{wt} - h_{lt})/h_{wv})\right] \bar{\gamma} \qquad (12)$$

is achieved when the transmit powers node of $u$ and $l$ are changed to

$$P_u = \bar{\gamma}/h_{uw} \text{ and } P_l = 1/h_{lt}(1 - A(l) + h_{ut}/h_{uv} - h_{ut}/h_{uw} - h_{wt}/hwv)\, \bar{\gamma} . (13)$$

The transmit power of the new relay, $w$, is $P_w = \bar{\gamma}/h_{wv}$. The transmit powers of all the other relays in the route are unchanged.

**Proof**

Using an argument analogous to that in Lemma 3, the power allocation after node w is added as a relay corresponds to that in equation (13). The condition for power reduction in equation (11) can be derived in a fashion similar to equation (5). To achieve the power reductions, the condition in equation (11) requires that every relay in the serial DEA route determines the gain $h_{lt}$. This is not conducive to a distributed implementation. The following corollary provides a sufficient condition that guarantees power reductions without the need for every relay determining the gain $h_{lt}$.

**Corollary 1**

When node $u$ is not the last relay in the serial DEA route, adding the node w immediately after node $u$ results in power reductions if

$$h_{wt} > h_{ut} \text{ and } 1/h_{uw} + 1/h_{wv} < 1/h_{uv}. \qquad (14)$$

Theorem 2

When node $u$ is the last relay in a serial DEA route, adding a node $w$ immediately after node $u$ can reduce power consumption if $w$ satisfies the two conditions:

$$h_{wt} > h_{ut} \text{ and } h_{ut}/h_{uw} < 1 - A(u). \qquad (15)$$

A total power reduction of

$$P_u^{\text{red}}(w) = (1/h_{ut} - 1/h_{wt})(1 - A(u) - h_{ut}/h_{uw})\, \bar{\gamma} \qquad (16)$$

is achieved when the transmit power of node $u$ is changed to $P_u = \bar{\gamma}/h_{uw}$, and the transmit power of the new node $w$ is

$$P_w = 1/h_{wt}(1 - A(u) - h_{ut}/h_{uw})\, \bar{\gamma} . \qquad (17)$$

The transmit powers of all the other relays in the route are unchanged.

Proof

Using an analogous argument as in Lemma 4, the power allocation, after node *w* is added, corresponds to that in equation (10). The condition for power reduction in equation (15) can be derived in a similar manner as in equation (8). Both theorem 2 and corollary 1 show that all potential relays, i.e., the nodes that lead to power reductions, can already successfully decode the transmissions from immediately previous relays. As a result, local channel state information and minimal feedback from the potential relays can be used to progressively increment the serial DEA route to reduce total power.

**Progressive Accumulative Route (PAR)**

Initially, a basic route is established between the source and the destination. Conventional route discovery processes can be used to discover a route between nodes *s* and *t* in networks when a direct link from node *s* to *t* does not exist.

Then, the PAR process progressively and distributively adds relays to improve the energy-efficiency of the serial DEA route. That is, energy consumption is reduced while transmitting packets along the route. This relay discovery process is done via two types of packets: a *data* packet that contains the data to be transmitted from node *s* to node *t,* and a *ready-to-cooperate* (RTC) packet for feedback of the limited additional information required for modifying the route.

The source transmits data to the destination through the already established serial DEA route. The source transmits a new packet to its next relay, *N(s)*, with power $\bar{\gamma}/h_{sN(s)}$. Neighboring nodes that receive a transmission from a currently transmitting relay in the established serial DEA route check, using only the local information available and the information in the data packet, whether their participation as a relay can lead to further power reduction. If so, the nodes feedback the RTC packet to the relay whose transmission the nodes overheard.

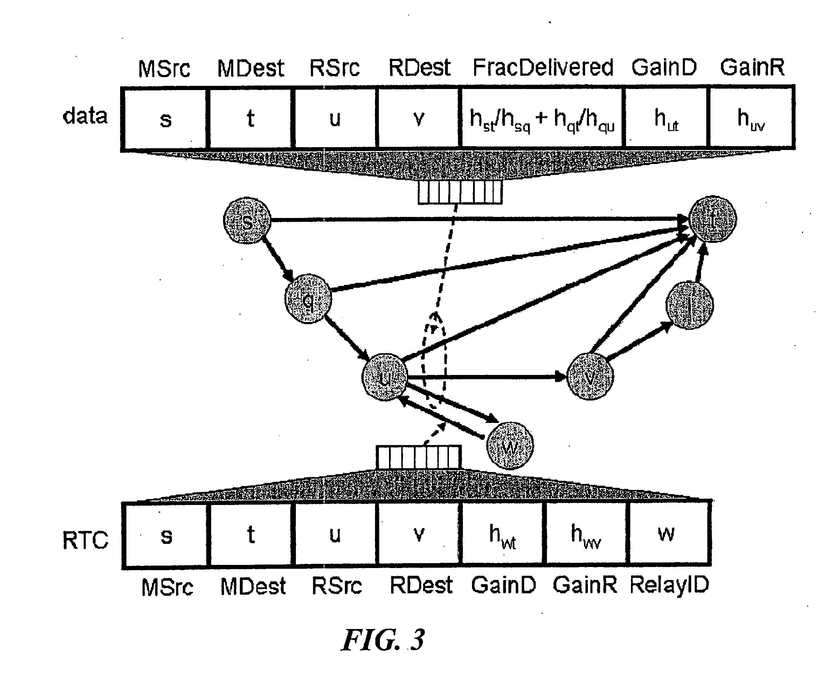

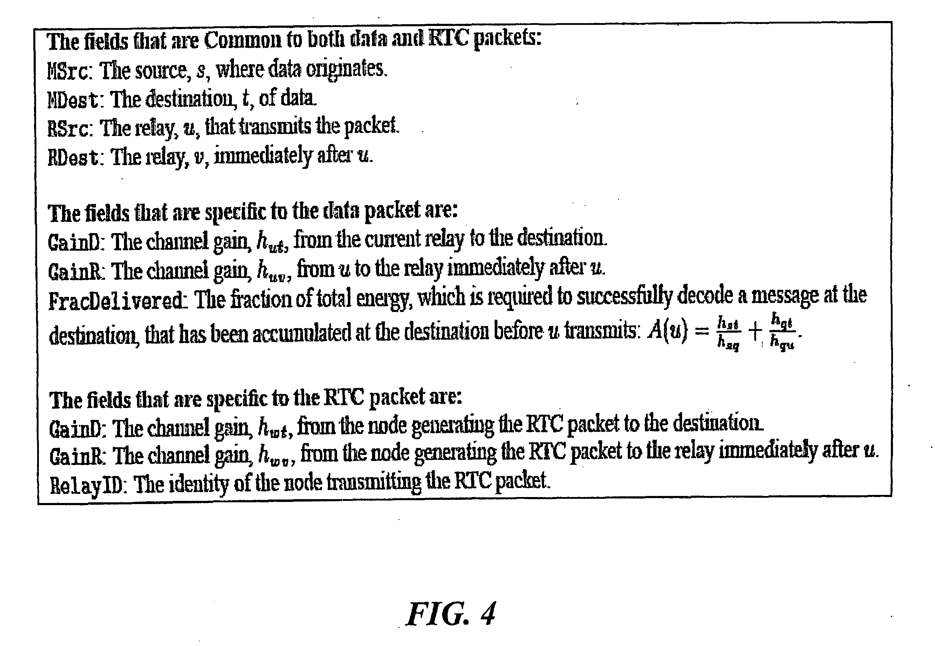

Figure 3 shows the structure of the data and RTC packets. The meaning of each field in the packets is shown in Fig. 4.

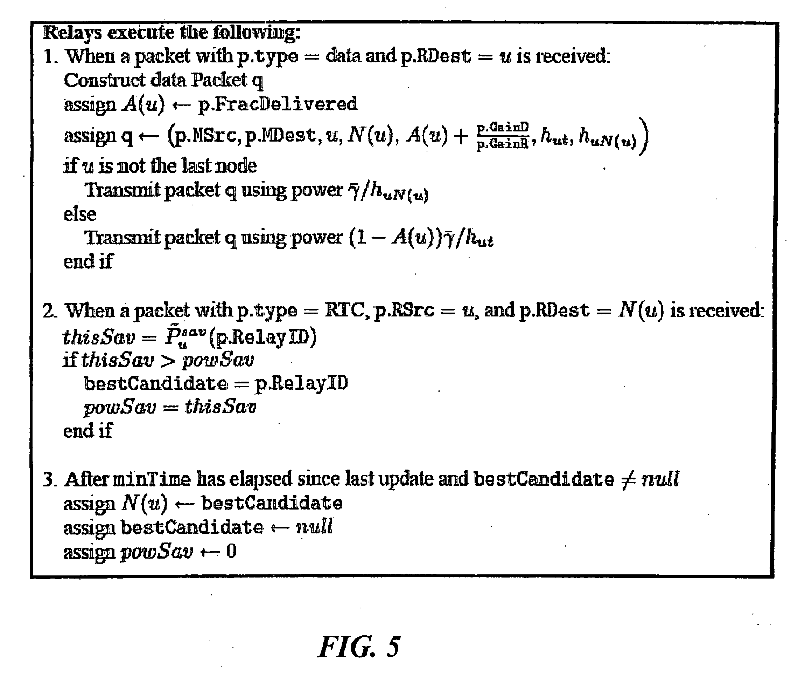

The pseudo code of the PAR process is shown in Figure 5. When a relay *u*, which is not the source, successfully decodes the data packet *p*, the relay acts upon the packet only if p.RDest = u. Then, the relay knows that the final destination is p.MDest, and the total power that has accumulated at the destination after *p* was transmitted is p.FracDelivered + p.GainD/p.GainR. That is, the relay records the fractional energy that will be accumulated at the destination due to transmitting a particular packet to the destination. This recorded information is also forwarded to other nodes along the route, so that those nodes can also participate in the design of the route that minimizes energy.

If *u* is not the last relay, it transmits the packet to its next relay with power $\bar{\gamma}/h_{uN(u)}$. If the node is the last relay, the node transmits the packet with power $(1 - A(u))/h_{ut}$.

The relay *u* updates the route after a sufficient time, minTime, has elapsed since it last updated the route. The time minTime depends on a multiple access protocol, and is used to ensure that a relay has sufficient time to receive RTC feedback packets before the node decides on an additional relay. The node updates the next relay to be the next node, denoted by bestCandidate. This leads to maximum power reduction. The RTC packets enable node *u* to find the node bestCandidate. When node *u* receives the RTC packet from node *w*, the fields of the packet enable node *u* to determine the power reduction if node *w* is made the next relay as follows.

If *u* is not the last relay,

$$P_u^{\text{red}}(w) = (1/h_{uv} - 1/h_{uw} - 1/h_{wv})\ \bar{\gamma}, \qquad (18)$$

If *u* is the last relay,

$$P_u^{\text{red}}(w) = (1/h_{ut} - 1/h_{wt})(1 - A(u) - h_{ut}/h_{uw})\ \bar{\gamma}, (19)$$

where *v* is the relay immediately after *u*: *v* = *N(u)*. If $P_u^{\text{red}}(w)$ exceeds the power reduction achievable by the current best candidate, we update bestCandidate to be node *w*.

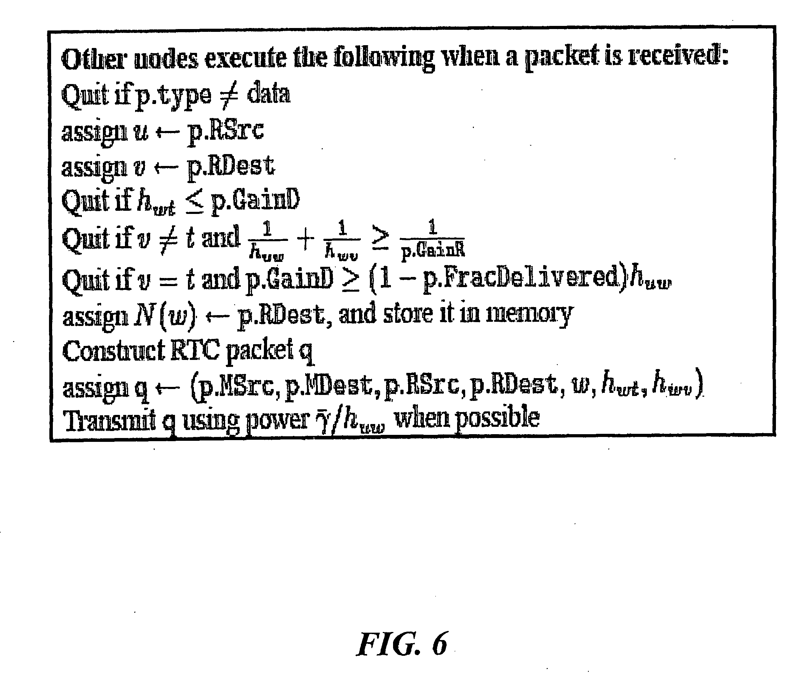

When the node *w* receives the data packet, *p*, from the relay u, the fields of the data packet enables node *w* to check, using equations (14) or (15), whether becoming a relay can reduce total power. If so, node w stores *N(w)* = p.RDest in memory, and generates and transmits an RTC packet to *u* when possible, according to multiple access protocol. The pseudo code for a node is given in Figure 6.

**Effect of the Invention**

In the wireless relay network according to embodiments of the invention, only the destination accumulates energy, but the relay nodes do not. Such network, with considerably simpler relays, has comparable energy efficiency as a conventional network where energy accumulates at every node. A destination energy accumulative network is also more energy efficient than traditional multi-hop networks that do not accumulate energy.

The PAR process discovers the DEA route and determines the relay transmission powers in a distributed manner. The process exploits local information about the channel gains, and uses very limited feedback from nodes that can be added to the route as relays. The route discovery in PAR has a very low complexity, and is in contrast to the NP-complete nature of the route discovery process in full energy accumulative networks.

Using PAR, the nodes receive and can decode the packets currently being transmitted in the DEA route, and determine whether the nodes can act as relays to reduce the total power consumption of the route.

The latency for route setup using PAR is low, because a basic connectivity between the source and the destination is established right from the beginning, and improved routes, which progressively add more relays, over time. PAR is well suited for reducing the energy consumption in practical sensor networks with low complexity nodes.

**Claims**

1.  A method for transmitting packets from a source node (s) to a destination node (d) via relay nodes (r, q) of a wireless network (100), comprising the steps of:

    receiving, in the destination node (d), multiple versions of a packet;
    decoding, in the destination node (d), the packet using the multiple received versions of the packet, and transmitting, from the source node (s) to the destination node, the packet along a route of relay nodes (r, q) to the destination node in the wireless network (100);
    **characterized is that** it comprises the step of
    storing, only in the destination node (d) multiple versions of the packet received from different relay nodes, and in that the route of relay nodes comprises a first relay node (r) and a second (r) relay node (q), the second relay node (q) being placed either on a link between the source node (s) and the first node (r) or on a link between the first node (r) and the destination node (d).

2.  The method of claim 1, in which the destination node (d) receives the multiple versions of the packet from multiple nodes.

3.  The method of claim 1, in which the versions of the packet are copies of the packet.

4.  The method of claim 1, in which the nodes use at least one antenna.

5.  The method of claim 1, further comprising:

    determining progressively an energy efficient route from the source node (s) to the destination node (d).

6.  The method of claim 5, in which the energy efficient route is based only on local channel state information available at each node.

7.  The method of claim 5, further comprising:

    setting transmit powers in the nodes.

8.  The method of claim 7, in which the setting is done in a distributed and progressive manner.

9.  The method of claim 1, in which energy of the multiple versions of the packet is accumulated by the destination node (d).

10. The method of claim 1, in which the decoding of the packet uses an accumulated energy of multiple received versions of the packet.

11. The method of claim 10, in which the packet is decoded after the accumulated energy of the multiple versions of the packet is equal to or greater than a predetermined threshold.

12. The method of claim 11, in which the predetermined threshold depends on a modulation and a coding used for transmitting the packet.

13. The method of claim 1, in which a cyclic redundancy check is inserted in the packet to determine whether the packet is decoded correctly.

14. The method of claim 1, further comprising:

adding a relay node (r, q) to the route so as to reduce a total power consumption along the route.

15. The method of claim 14, in which the added relay node (r, q) is inserted serially between nodes along the route.

16. The method of claim 1, in which the packet is received by a potential relay node.

17. The method of claim 16, in which a request-to-cooperate packet is sent by the potential relay node to indicate that the potential relay node can act as a relay node (r, q) along the route.

18. The method of claim 16, in which a particular node receiving the request-to-cooperate packet determines whether to use the potential relay node.

19. The method of claim 1, further comprising:

determining the route from the source node (s) to the destination node (d); and
adding progressively relay nodes (r, q) to the route to decrease energy consumption while transmitting the packet along the route.

20. The method of claim 1, further comprising:

updating progressively the route from the source node (s) to the destination node (d) to decrease the energy consumption.

21. The method of claim 1, in which a particular relay node records a fraction of energy accumulated at the destination node (d) due to transmitting a particular packet to the destination node (d).

22. The method of claim 21, further comprising:

forwarding the recorded fraction of energy to a next node along the route.

23. The method of claim 1, in which a particular relay node records a fraction of energy accumulated at the destination node (d) due to transmitting a particular packet to the destination node (d) by nodes along the route from the particular relay node to the destination node (d).

24. A system for transmitting packets from a source node (s) to a destination node (d) via relay nodes (r, q) of a wireless network (100), system comprising:

a source node (s) configured to transmit a packet;
a plurality of relay nodes (r, q) configured to only receive the packet and only to retransmit the packet; and
a destination node (d) configured to receive multiple versions of the packet, the destination node (d) including means for decoding the packet using the multiple received versions of the packet., **characterized in that:**

**in that** the plurality of relay nodes comprises a route of relay nodes (r, q), the route of relay nodes comprising a first relay node (r ) and a second relay node being placed either on a link between the source node (s) and the first relay node (r ) or an a link between the first relay node (r) or an a link between the first relay node (r) and the destination node (d), and **in that** only the destination node (131) is configured to store the received multiple versions of the packet, received from different relay nodes.

# EP 1 885 076 B1

## Patentansprüche

1. Ein Verfahren zum Übermitteln von Paketen von einem Quellenknoten (s) über Relaisknoten (r, q) eines drahtlosen Netzwerks (100) zu einem Zielknoten (d), aufweisend die folgenden Schritte:

Empfangen von mehreren Versionen eines Paketes in dem Zielknoten (d),
Dekodieren des Paketes in dem Zielknoten (d) mittels der mehreren empfangenen Versionen des Paketes und
Übermitteln des Paketes von dem Quellenknoten (s) zu dem Zielknoten entlang einer Route von Relaisknoten (r, q) zu dem Zielknoten in dem drahtlosen Netzwerk (100),
**dadurch gekennzeichnet, dass** es den folgenden Schritt aufweist:

Speichern von von verschiedenen Relaisknoten empfangenen mehreren Versionen des Paketes nur in dem Zielknoten (d),
und

dadurch, dass die Route von Relaisknoten einen ersten Relaisknoten (r) und einen zweiten (r) Relaisknoten (q) aufweist, wobei der zweite Relaisknoten (q) entweder an einer Verbindung zwischen dem Quellenknoten (s) und dem ersten Knoten (r) oder an einer Verbindung zwischen dem ersten Knoten (r) und dem Zielknoten (d) platziert ist.

2. Das Verfahren gemäß Anspruch 1, wobei der Zielknoten (d) die mehreren Versionen des Paketes von mehreren Knoten empfängt.

3. Das Verfahren gemäß Anspruch 1, wobei die Versionen des Paketes Kopien des Paketes sind.

4. Das Verfahren gemäß Anspruch 1, wobei die Knoten mindestens eine Antenne verwenden.

5. Das Verfahren gemäß Anspruch 1, ferner aufweisend:

das progressive Ermitteln einer energieeffizienten Route von dem Quellenknoten (s) zu dem Zielknoten (d).

6. Das Verfahren gemäß Anspruch 5, wobei die energieeffiziente Route nur auf lokalen Kanalzustandsinformationen basiert, die an jedem Knoten verfügbar sind.

7. Das Verfahren gemäß Anspruch 5, ferner aufweisend:

das Einstellen von Sendeleistungen in den Knoten.

8. Das Verfahren gemäß Anspruch 8, wobei das Einstellen auf eine verteilte und progressive Weise erfolgt.

9. Das Verfahren gemäß Anspruch 1, wobei Energie der mehreren Versionen des Paketes von dem Zielknoten (d) gespeichert wird.

10. Das Verfahren gemäß Anspruch 1, wobei das Dekodieren des Paketes eine gespeicherte Energie von mehreren empfangenen Versionen des Paketes nutzt.

11. Das Verfahren gemäß Anspruch 10, wobei das Paket dekodiert wird, nachdem die gespeicherte Energie der mehreren Versionen des Paketes größer oder gleich einer vorbestimmten Schwelle ist.

12. Das Verfahren gemäß Anspruch 11, wobei die vorbestimmte Schwelle von einer zum Übermitteln des Paketes verwendeten Modulation und Kodierung abhängt.

13. Das Verfahren gemäß Anspruch 1, wobei zum Ermitteln dessen, ob das Paket korrekt dekodiert wird, eine zyklische Redundanzprüfung in das Paket eingefügt wird.

14. Das Verfahren gemäß Anspruch 1, ferner aufweisend:

das Hinzufügen eines Relaisknotens (r, q) zu der Route zum Verringern eines Gesamtenergieverbrauchs entlang der Route.

15. Das Verfahren gemäß Anspruch 14, wobei der hinzugefügte Relaisknoten (r, q) zwischen Knoten entlang der Route in Reihe eingefügt wird.

16. Das Verfahren gemäß Anspruch 1, wobei das Paket von einem potentiellen Relaisknoten empfangen wird.

17. Das Verfahren gemäß Anspruch 16, wobei ein Kooperations-Anfrage-Paket von dem potentiellen Relaisknoten gesendet wird, um anzuzeigen, dass der potentielle Relaisknoten entlang der Route als Relaisknoten (r, q) wirken kann.

18. Das Verfahren gemäß Anspruch 16, wobei ein bestimmter Knoten, der das Kooperations-Anfrage-Paket empfängt, bestimmt, ob der potentielle Relaisknoten verwendet werden soll.

19. Das Verfahren gemäß Anspruch 1, ferner aufweisend:

    das Ermitteln der Route von dem Quellenknoten (s) zu dem Zielknoten (d) und
    das progressive Hinzufügen von Relaisknoten (r, q) zu der Route zum Verringern des Energieverbrauchs während des Übermittelns des Paketes entlang der Route.

20. Das Verfahren gemäß Anspruch 1, ferner aufweisend:

    das progressive Aktualisieren der Route von dem Quellenknoten (s) zu dem Zielknoten (d) zum Verringern des Energieverbrauchs.

21. Das Verfahren gemäß Anspruch 1, wobei ein bestimmter Relaisknoten einen Teil von an dem Zielknoten (d) aufgrund des Übermittelns eines bestimmten Paketes zu dem Zielknoten (d) gespeicherter Energie aufzeichnet.

22. Das Verfahren gemäß Anspruch 21, ferner aufweisend:

    das Weiterleiten des aufgezeichneten Energieanteils zu einem nächsten Knoten entlang der Route.

23. Das Verfahren gemäß Anspruch 1, wobei ein bestimmter Relaisknoten einen Teil von an dem Zielknoten (d) aufgrund des Übermittelns eines bestimmten Paketes zu dem Zielknoten (d) durch Knoten entlang der Route von dem bestimmten Relaisknoten zu dem Zielknoten (d) gespeicherter Energie aufzeichnet.

24. Ein System zum Übermitteln von Paketen von einem Quellenknoten (s) über Relaisknoten (r, q) eines drahtlosen Netzwerks (100) zu einem Zielknoten (d), wobei das System aufweist:

    einen Quellenknoten (s), der zum Übermitteln eines Paketes konfiguriert ist,
    eine Mehrzahl von Relaisknoten (r, q), die nur zum Empfangen des Paketes und nur zum erneuten Übermitteln des Paketes konfiguriert sind, und
    einen Zielknoten (d), der zum Empfangen von mehreren Versionen des Paketes konfiguriert ist, wobei der Zielknoten (d) Mittel zum Dekodieren des Paketes mittels der mehreren empfangenen Versionen des Paketes aufweist, **dadurch gekennzeichnet, dass:**

    die Mehrzahl von Relaisknoten eine Route von Relaisknoten (r, q) aufweist, wobei die Route von Relaisknoten einen ersten Relaisknoten (r) und einen zweiten Relaisknoten aufweist, der entweder an einer Verbindung zwischen dem Quellenknoten (s) und dem ersten Relaisknoten (r) oder an einer Verbindung zwischen dem ersten Relaisknoten (r) und dem Zielknoten (d) platziert ist, und dadurch, dass nur der Zielknoten (131) zum Speichern der empfangenen mehreren Versionen des Paketes konfiguriert ist, die von verschiedenen Relaisknoten empfangen werden.

**Revendications**

1. Procédé de transmission de paquets à partir d'un noeud source (s) vers un noeud de destination (d) via des noeuds relais (r, q) d'un réseau sans fil (100), comprenant les étapes consistant à :

    Recevoir, dans le mur de destination (d), de multiples versions d'un paquet ;

Décoder, dans le noeud de destination (d), le paquet en utilisant les multiples versions reçues du paquet, et transmettre à partir du noeud source (s) vers le noeud de destination, le paquet le long d'un trajet de noeuds relais (r, q) vers le noeud de destination dans le réseau sans fil (100) ;

**caractérisé en ce qu'**il comprend l'étape consistant à

enregistrer, seulement dans le noeud de destination (d), de multiples versions du paquet reçu à partir de différents noeuds relais,

et

**en ce que** le trajet des noeuds relais comprend un premier noeud relais (r) et un second (r) noeud relais (q), le second noeud relais (q) étant placé soit sur une liaison entre le noeud source (s) et le premier noeud (r) soit sur une liaison entre le premier noeud (r) et le noeud de destination (d).

2. Procédé selon la revendication 1, dans lequel le noeud de destination (d) reçoit les multiples versions du paquet à partir des multiples noeuds.

3. Procédé selon la revendication 1, dans lequel les versions du paquet sont des copies du paquet.

4. Procédé selon la revendication 1, dans lequel les noeuds utilisent au moins une antenne.

5. Procédé selon la revendication 1, comprenant en outre l'étape consistant à :

   déterminer progressivement un trajet à faible consommation d'énergie depuis le noeud source (s) vers le noeud de destination (d).

6. Procédé selon la revendication 5, dans lequel le trajet à faible consommation d'énergie est basé seulement sur une information d'état de canal local disponible au niveau de chaque noeud.

7. Procédé selon la revendication 5, comprenant en outre :

   un réglage des puissances de transmission dans les noeuds.

8. Procédé selon la revendication 7, dans lequel le réglage est effectué de manière répartie et progressive.

9. Procédé selon la revendication 1, dans lequel l'énergie de multiples versions du paquet est accumulée par le noeud de destination (d).

10. Procédé selon la revendication 1, dans lequel le décodage du paquet utilise l'énergie cumulée des multiples versions reçues du paquet.

11. Procédé selon la revendication 10, dans lequel le paquet est décodé lorsque l'énergie cumulée des multiples versions du paquet est égale ou supérieure à un seuil prédéterminé.

12. Procédé selon la revendication 11, dans lequel le seuil prédéterminé dépend d'une modulation et d'un codage utilisé pour transmettre le paquet.

13. Procédé selon la revendication 1, dans lequel un contrôle de redondance cyclique est inséré dans le paquet pour déterminer si le paquet est décodé correctement.

14. Procédé selon la revendication 1, comportant en outre l'étape consistant à :

   ajouter un noeud relais (r, q) au trajet afin de réduire la consommation énergétique totale le long du trajet.

15. Procédé selon la revendication 14, dans lequel le noeud relais ajouté (r, q) est inséré en série entre des noeuds le long du trajet.

16. Procédé selon la revendication 1, dans lequel le paquet est reçu par un noeud relais potentiel.

17. Procédé selon la revendication 16, dans lequel un paquet de demande de coopération est transmis par le noeud relais potentiel pour indiquer que le noeud relais potentiel peut agir comme un noeud relais (r, q) le long du trajet.

EP 1 885 076 B1

**18.** Procédé selon la revendication 16, dans lequel un noeud particulier recevant le paquet de demande de coopération détermine si le noeud relais potentiel doit être utilisé ou non.

**19.** Procédé selon la revendication 1, comprenant en outre les étapes consistant à :

déterminer le trajet à partir du noeud source (s) vers le noeud de destination (d) ; et
ajouter progressivement des noeuds relais (r, q) au trajet afin de diminuer la consommation d'énergie tout en assurant la transmission du paquet le long du trajet.

**20.** Procédé selon la revendication 1, comprenant en outre l'étape consistant à :

mettre à jour progressivement le trajet du noeud source (s) vers le noeud de destination (d) afin de diminuer la consommation d'énergie.

**21.** Procédé selon la revendication 1, dans lequel un noeud relais particulier enregistre une fraction de l'énergie accumulée au niveau du noeud de destination (d) du fait de la transmission d'un paquet particulier vers le noeud de destination (d).

**22.** Procédé selon la revendication 21, comprenant en outre l'étape consistante à :

envoyer la fraction d'énergie enregistrée vers un noeud suivant le long du trajet.

**23.** Procédé selon la revendication 1, dans lequel un noeud relais particulier enregistre une fraction de l'énergie accumulée au niveau du noeud de destination (d) du fait de la transmission d'un paquet particulier vers le noeud de destination (d) par des noeuds le long du trajet depuis le noeud relais particulier vers le noeud de destination (d).

**24.** Système de transmission de paquets à partir d'un noeud source (s) vers un noeud de destination (d) via des noeuds relais (r, q) d'un réseau sans fil (100), le système comprenant :

un noeud source (s) configuré pour transmettre un paquet ;
une pluralité de noeuds relais (r, q) configurés pour recevoir exclusivement le paquet et retransmettre uniquement le paquet ; et
un noeud de destination (d) configuré pour recevoir de multiples versions du paquet, le noeud de destination (d) comprenant des moyens pour décoder le paquet en utilisant les multiples versions reçues du paquet, **caractérisé en ce que :**

la pluralité de noeuds relais comprend un trajet de noeuds relais (r, q), le trajet de noeuds relais comprenant un premier noeud relais (r) et un second noeud relais placé soit sur une liaison entre le noeud source (s) et le premier noeud relais (r), soit sur une liaison entre le premier noeud relais (r) et le noeud de destination (d), et **en ce que** seul le noeud de destination (131) est configuré pour enregistrer les multiples versions reçues du paquet, en provenance de différents noeuds relais.

15

**100**
**FIG. 1**

EP 1 885 076 B1

FIG. 2B

FIG. 2D

FIG. 2A

FIG. 2C

| | MSrc | MDest | RSrc | RDest | FracDelivered | GainD | GainR |
|---|---|---|---|---|---|---|---|
| data | s | t | u | v | $h_{st}/h_{sq} + h_{qt}/h_{qu}$ | $h_{ut}$ | $h_{uv}$ |

| | MSrc | MDest | RSrc | RDest | GainD | GainR | RelayID |
|---|---|---|---|---|---|---|---|
| RTC | s | t | u | v | $h_{wt}$ | $h_{wv}$ | w |

**FIG. 3**

The fields that are Common to both data and RTC packets:

MSrc: The source, $s$, where data originates.

MDest: The destination, $t$, of data.

RSrc: The relay, $u$, that transmits the packet.

RDest: The relay, $v$, immediately after $u$.

The fields that are specific to the data packet are:

GainD: The channel gain, $h_{ut}$, from the current relay to the destination.

GainR: The channel gain, $h_{uv}$, from $u$ to the relay immediately after $u$.

FracDelivered: The fraction of total energy, which is required to successfully decode a message at the

destination, that has been accumulated at the destination before $u$ transmits: $A(u) = \frac{h_{st}}{h_{sq}} + \frac{h_{qt}}{h_{qu}}$.

The fields that are specific to the RTC packet are:

GainD: The channel gain, $h_{wt}$, from the node generating the RTC packet to the destination.

GainR: The channel gain, $h_{wv}$, from the node generating the RTC packet to the relay immediately after $u$.

RelayID: The identity of the node transmitting the RTC packet.

EP 1 885 076 B1

*FIG. 4*

Relays execute the following:

1. When a packet with p.type = data and p.RDest = $u$ is received:

   Construct data Packet q

   assign $A(u) \leftarrow$ p.FracDelivered

   assign $q \leftarrow \left( \text{p.MSrc}, \text{p.MDest}, u, N(u), A(u) + \frac{\text{p.GainD}}{\text{p.GainR}}, h_{ut}, h_{uN(u)} \right)$

   if $u$ is not the last node

      Transmit packet q using power $\bar{\gamma}/h_{uN(u)}$

   else

      Transmit packet q using power $(1 - A(u))\bar{\gamma}/h_{ut}$

   end if


2. When a packet with p.type = RTC, p.RSrc = $u$, and p.RDest = $N(u)$ is received:

   $thisSav = \tilde{P}_u^{sav}(\text{p.RelayID})$

   if $thisSav > powSav$

      bestCandidate = p.RelayID

      $powSav = thisSav$

   end if


3. After minTime has elapsed since last update and bestCandidate $\neq null$

   assign $N(u) \leftarrow$ bestCandidate

   assign bestCandidate $\leftarrow null$

   assign $powSav \leftarrow 0$

EP 1 885 076 B1

*FIG. 5*

Other nodes execute the following when a packet is received:

Quit if p.type $\neq$ data

assign $u \leftarrow$ p.RSrc

assign $v \leftarrow$ p.RDest

Quit if $h_{wt} \leq$ p.GainD

Quit if $v \neq t$ and $\dfrac{1}{h_{uw}} + \dfrac{1}{h_{wv}} \geq \dfrac{1}{\text{p.GainR}}$

Quit if $v = t$ and p.GainD $\geq (1 - \text{p.FracDelivered})h_{uw}$

assign $N(w) \leftarrow$ p.RDest, and store it in memory

Construct RTC packet q

assign $q \leftarrow$ (p.MSrc, p.MDest, p.RSrc, p.RDest, $w$, $h_{wt}$, $h_{wv}$)

Transmit q using power $\bar{\gamma}/h_{uw}$ when possible

*FIG. 6*

EP 1 885 076 B1

**EP 1 885 076 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 200300262222 A1

### Non-patent literature cited in the description

- **J. LI ; D. CORDES ; J. ZHANG.** Power-aware routing protocols in ad hoc wireless networks. *IEEE Wireless Commun. Magazine,* December 2005, 69-81
- **A. MICHAIL ; A. EPHREMIDES.** Energy efficient routing for connection-oriented traffic in ad hoc wireless networks. *Proc. IEEE Int. Symp. Personal, Indoor, Mobile Radio Commun.,* September 2000, 762-66
- **J. E. WIESELTHIER ; G. D. NGUYEN ; A. EPHREMIDES.** On the construction of energy efficient broadcast and multicast trees in wireless networks. *Proc. IEEE INFOCOM,* March 2000
- **A. E. KHANDANI ; J. ABOUNADI ; E. MODIANO ; L. ZHENG.** Cooperative routing in wireless networks. *Proc. Allerton Conf. on Commun., Contr. and Computing,* May 2003

- **A. S. AHLUWALIA ; E. H.MODIANO.** On the complexity and distributed construction of energy efficient broadcast trees in wireless ad hoc networks. *IEEE Trans. Wireless Commun,* 2005, vol. 4 (5
- **J. CARTIGNY ; D. SIMPLOT ; I. STOJMENOVI'C.** Localized minimum-energy broadcasting in ad-hoc networks. *Proc. IEEE INFOCOM,* April 2003
- **I. MARIC ; R. D. YATES.** Efficient multihop broadcast for wideband systems. *DIMACS Workshop on Signal Processing for Wireless Transmission,* October 2002
- **M. AGARWAL ; J. H. CHO ; L. GAO ; J.WU.** Energy efficient broadcast in wireless ad hoc networks with hitch-hiking. *Proc. IEEE INFOCOM,* March 2004
- **I. Maric ; R. D. Yates.** Cooperative multicast for maximum network lifetime. *IEEE J. Select. Areas Commun,* January 2005, vol. 23, 127-135